(19) Europäisches Patentamt
European Patent Office
Office européen des brevets

(11) **EP 1 011 051 A1**

(12) **DEMANDE DE BREVET EUROPEEN**

(43) Date de publication:
**21.06.2000 Bulletin 2000/25**

(51) Int. Cl.[7]: **G06F 13/42**

(21) Numéro de dépôt: **98403131.0**

(22) Date de dépôt: **11.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **T.Sqware SA**
**78284 Guyancourt Cedex (FR)**

(72) Inventeur: **Douady, César**
**75006 Paris (FR)**

(74) Mandataire: **Fréchède, Michel**
**Cabinet Plasseraud**
**84, rue d'Amsterdam**
**F-75440 Paris Cédex 09 (FR)**

(54) **Protocole et système de liaison par BUS entre éléments d'un microcontrôleur**

(57) L'invention concerne un protocole et un système de liaison interne d'un microcontrôleur. Ces éléments, interconnectés par une liaison BUS parallèle, échangent au cours d'une transaction des messages successifs sur une pluralité de cycles d'horloge. Un élément émetteur maître ($CPU_1$,M) transmet, sur un cycle d'horloge courant, vers un récepteur esclave ($Mem_1$,SL) destinataire, un message d'instruction, codé sur N+p bits, comportant un champ principal (Dout), N bits, et un champ auxiliaire, p bits, comportant un code opération (COD.OP), une signature (Sig) identifiant élément maître (M) et esclave (SL) et leur transaction. Un message de justificatif de transmission (Sen) et un message d'accusé de réception (Ack) sont transmis de l'élément maître (M) vers l'élément esclave (SL) et réciproquement sur le cycle d'horloge suivant. Les étapes ($TP_1$, $TP_2$, $TP_3$) sont répétées sur au moins un cycle d'horloge ultérieur.

Application à la réalisation de microcontrôleurs.

FIG.2b.

EP 1 011 051 A1

**Description**

Dans le domaine de l'informatique, les unités centrales de traitement tendent actuellement à présenter une structure de plus en plus complexe, en raison des objectifs sans cesse accrus de puissance de traitement.

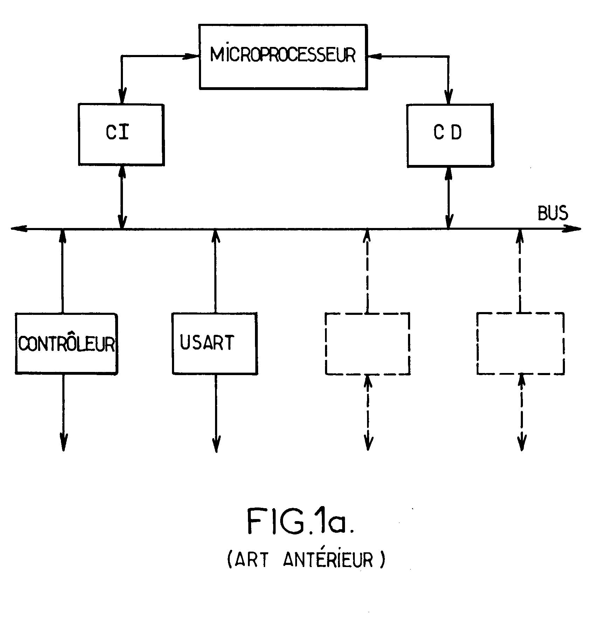

En vue d'accroître ce paramètre, on a jusqu'à ce jour proposé, dans un premier temps, d'insérer entre l'unité centrale de traitement, telle qu'un microprocesseur, et la mémoire vive, une mémoire cache dont le temps d'accès est très largement inférieur au temps d'accès de la mémoire vive, souvent dans un rapport 10. Ainsi qu'on l'a d'ailleurs représenté en figure 1a, la mémoire cache est en fait subdivisée en une mémoire cache d'instruction CI et une mémoire cache de données CD, ou adresses, interconnectées chacune par une liaison par BUS à la mémoire vive par un contrôleur par exemple. D'autres unités de liaison telles que contrôleur ou unité d'émetteurs-récepteurs universels synchrone-asynchrone, USART, sont interconnectées au BUS de liaison afin de permettre la mise en communication de l'unité centrale de traitement.

Dans un deuxième temps, afin d'augmenter encore la puissance de traitement, des structures multiprocesseurs multiniveaux ont été proposées.

Dans le cadre de l'exposé de l'objet de la présente invention, la notion de structure multiprocesseurs n'est pas limitée à un nombre donné de microprocesseurs, une structure monoprocesseur, telle que représentée figure 1a, étant également comprise dans cette notion. En conséquence, les termes structure de type microprocesseur et microcontrôleur, pouvant comporter un ou plusieurs microprocesseurs, seront employés indifféremment.

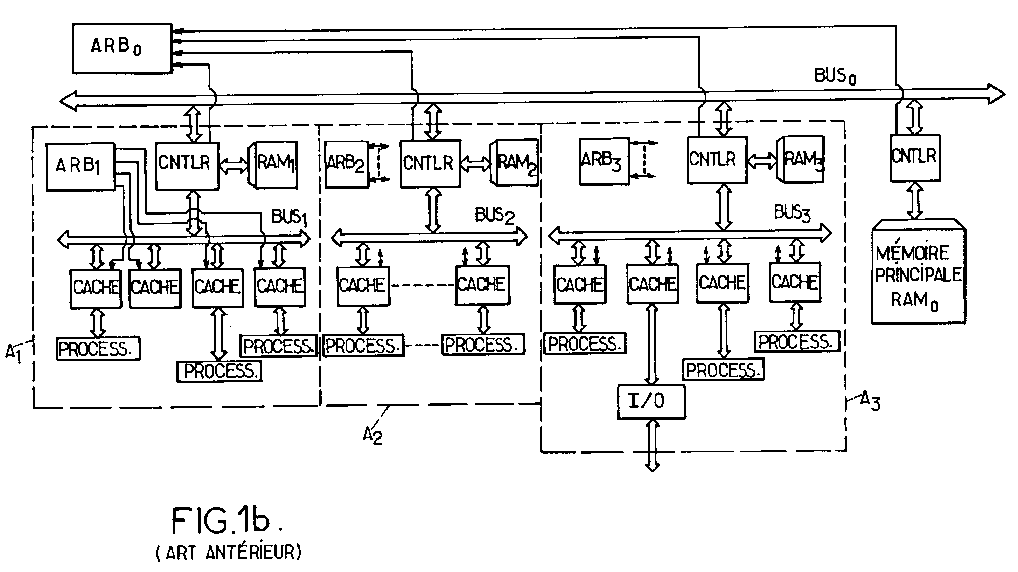

Ces structures multiples, telles que représentées par exemple en figure 1b, peuvent comprendre successivement :

- un BUS général, $BUS_0$, auquel est interconnecté par l'intermédiaire d'un contrôleur une mémoire principale, $RAM_0$, partagée par les différents microprocesseurs ;
- une pluralité d'agrégats de microprocesseurs, chaque agrégat $A_1$ à $A_3$ comportant un nombre déterminé de microprocesseurs, étant, bien entendu, interconnecté au BUS général et à la mémoire principale par l'intermédiaire d'un contrôleur ;
- un circuit gestionnaire de conflit d'intercommunication, $ARB_0$, présentant une structure en arbre et interconnecté directement au contrôleur, CNTRL, de chaque agrégat.

D'une manière générale, ainsi qu'on pourra d'ailleurs l'observer sur la figure 1b, la structure de chaque agrégat reproduit sensiblement celle de la structure multiprocesseurs, relativement aux agrégats, dans la mesure où chaque agrégat est implanté autour d'un BUS local $BUS_1$ à $BUS_3$ auquel l'ensemble des éléments de l'agrégat considéré est interconnecté. Ainsi qu'il apparaît sur la figure 1b, tout microprocesseur d'un agrégat déterminé est donc interconnecté, par l'intermédiaire d'une première mémoire cache, subdivisée par exemple en mémoire cache d'instruction et mémoire cache de données ainsi que représenté en figure 1a, au BUS local de l'agrégat correspondant, lequel, par l'intermédiaire d'un contrôleur, est interconnecté au BUS général, $BUS_0$. Chaque agrégat comprend également une deuxième mémoire cache $RAM_1$ à $RAM_3$ directement reliée au contrôleur de l'agrégat, la première mémoire cache de chaque microprocesseur constituant une mémoire cache de premier niveau et la deuxième mémoire cache une mémoire cache de deuxième niveau. Enfin, chaque agrégat comprend un circuit local gestionnaire de conflit d'intercommunication $ARB_1$ à $ARB_3$ présentant également une structure en arbre et interconnecté à chaque mémoire cache de premier niveau de l'agrégat correspondant.

Le mode opératoire de chaque élément constitutif de la structure multiprocesseurs, un élément pouvant être constitué soit par un élément constitutif d'un agrégat, soit par un agrégat lui-même ou encore par la mémoire principale, est géré par un protocole d'intercommunication, complexe, dans lequel des niveaux hiérarchiques ou prioritaires sont affectés à chaque élément précité. On comprend bien sûr que le nombre de niveaux hiérarchiques, BUS général, BUS local, n'est en outre pas limité à deux, ainsi que représenté en figure 1b, un niveau hiérarchique étant associé à tous les éléments interconnectés à un BUS général local, plusieurs niveaux hiérarchiques de BUS locaux pouvant être envisagés dans des structures très complexes.

Contrairement aux systèmes de liaison par BUS classiques utilisés dans les architectures de microcontrôleurs connus, tels que le MC68000 de MOTOROLA, dans lesquels la liaison par BUS est bloquée pendant toute la durée de la transaction, en lecture ou en écriture, le protocole d'intercommunication de l'ensemble des éléments est un protocole connu en langage anglo-saxon sous le nom de "*split cycle*", dans lequel des paquets de données sont transmises, les messages relatifs aux adresses et aux données étant différents et les messages de données, en particulier, étant de longueur différente, afin de permettre de réduire au maximum les temps d'attente, pendant lesquels aucun message n'est transmis sur les BUS.

La longueur différente des messages de données implique, nécessairement, une gestion de type prédictif des risques de conflit d'intercommunication par les différents circuits gestionnaires de conflits d'intercommunication prévus dans l'ensemble de la structure multiprocesseurs. En tout état de cause, chaque circuit gestionnaire de conflit d'intercommunication doit, afin d'habiliter un élément quelconque placé sous son autorité, auquel ce dernier est donc interconnecté, attendre que la transmission de tout message de données, de longueur variable, soit validée. Pour une description plus détaillée d'un mode opératoire comparable, on pourra utilement se reporter au brevet US 5,265,635. Un tel mode opératoire, complexe, permet bien de réduire au minimum les temps d'attente et d'absence de transmission de messages sur le BUS, et donc, en cela, d'optimiser la bande passante logique de cette liaison par BUS, au moins pour les messages de données les plus longs.

Pour une récapitulation des principales solutions apportées à la gestion des conflits d'accès et d'intercommunication entre les différents éléments des structures à multiprocesseurs, on pourra utilement se reporter à l'ouvrage publié par Kai Hwang, Université of Southern California, et Fayé, Rice University, intitulé "*Computer Architecture and Parallel Processing*", Mc Graw-Hill Book Company, p.480 à 487.

La présente invention a pour objet de remédier aux inconvénients précités du protocole d'intercommunication "*split cycle*", par la mise en oeuvre d'un protocole d'intercommunication spécifique entre éléments d'une structure de type multiprocesseurs dans lequel le caractère de variabilité de la longueur des messages de données et/ou d'adresses est supprimé.

Un autre objet de la présente invention est la mise en oeuvre d'un protocole d'intercommunication spécifique entre éléments d'une structure de type multiprocesseurs, permettant la transmission de messages de données ou d'adresses sensiblement de même longueur, sur un nombre de cycles d'horloge déterminé.

Un autre objet de la présente invention est la mise en oeuvre d'un protocole d'intercommunication spécifique entre éléments d'une structure de type multiprocesseurs, dans laquelle la bande passante logique de la liaison par BUS entre ces éléments est optimisée, quel que soit le type de transaction intervenant entre les différents types de ces éléments.

Un autre objet de la présente invention est également, grâce à la mise en oeuvre d'un protocole d'intercommunication spécifique entre éléments d'une structure de type multiprocesseurs dans lequel les messages d'adresses ou de données ont sensiblement la même longueur, une simplification du processus de gestion de conflit d'intercommunication entre éléments de la structure de type multiprocesseurs.

Un autre objet de la présente invention est enfin, grâce à la mise en oeuvre du protocole d'intercommunication précité entre éléments d'une structure de type multiprocesseurs, le remplacement de la mémoire de pile de type FIFO de chaque élément de cette structure de type multiprocesseurs par de simples registres, correspondant à la taille fixe des messages transmis, ce qui permet de simplifier notablement la structure interne de ces éléments et de ces structures multiprocesseurs avec un gain correspondant de niveaux d'intégration.

Le protocole de transmission de données numériques entre éléments constitutifs d'un microcontrôleur, objet de l'invention, microcontrôleur dans lequel chaque élément est interconnecté à un autre élément par l'intermédiaire d'au moins une liaison par BUS de type parallèle permettant la transmission de messages, constitutifs d'une transaction partielle entre deux de ces éléments, selon une transmission synchrone à partir du signal d'horloge, est remarquable en ce qu'il consiste au moins à transmettre à partir d'un élément émetteur de requête, désigné par élément maître, vers un élément récepteur destinataire, désigné par élément esclave, sur un cycle d'horloge courant, un message d'instruction comportant au moins, d'une part, un champ principal, codé sur N bits, contenant un mot de données utiles, communiquées par l'élément maître à l'élément esclave, et, d'autre part, un champ auxiliaire comportant au moins un champ de code opération permettant d'identifier le message d'instruction et un champ de signature permettant d'identifier l'élément maître et l'élément esclave destinataire de ce message d'instruction ainsi que la transaction intervenant entre cet élément maître et cet élément esclave. Un message de justificatif de transmission de l'élément maître vers l'élément esclave et un message d'accusé de réception de l'élément esclave vers l'élément maître sont transmis, simultanément, sur le cycle d'horloge suivant ce cycle d'horloge courant, la valeur vraie du message de justificatif d'émission et la valeur vraie du message d'accusé de réception permettant de valider cette transaction partielle. Les étapes précédentes sont répétées sur au moins un cycle d'horloge ultérieur audit cycle d'horloge courant entre le même couple d'éléments maître-esclave, pour exécuter, par une réponse à cette transaction partielle, une transaction entre ce même couple d'éléments, et entre au moins un autre couple d'éléments maître-esclave pour assurer l'exécution de transactions partielles et leurs réponses, constitutives de transactions, entre ces couples d'éléments maître-esclave. Le système de liaison interne par BUS entre les différents éléments constitutifs d'un microcontrôleur, ces éléments cadencés par un signal d'horloge échangeant à chaque cycle d'horloge au moins un mot de données utiles codé sur N bits entre un élément générateur de requête, désigné par élément maître, et un élément récepteur, désigné par élément esclave, est remarquable en ce que cette liaison est effectuée par l'intermédiaire d'au moins une liaison par BUS de N+p bits, chaque liaison permettant d'engendrer des messages d'instruction codés sur N+p bits comportant au moins, sur un même cycle d'horloge courant :

-    un champ principal comportant un mot de données utiles codé sur N bits communiqué par l'élément maître à l'élément esclave ;
-    un champ auxiliaire codé sur p bits, ce champ auxiliaire comportant au moins un champ de code opération permettant d'identifier le message d'instruction et un champ de signature permettant d'identifier l'élément maître et l'élément esclave destinataire de ce message d'instruction ainsi que la transaction intervenant entre cet élément maître et cet élément esclave, et, sur un cycle d'horloge suivant le cycle d'horloge courant :

- un champ de message de justificatif de transmission de l'élément maître vers l'élément esclave et un champ de message d'accusé de réception de l'élément esclave vers l'élément maître, la valeur vraie du message de justificatif de transmission et la valeur vraie du message d'accusé de réception permettant de valider une transaction partielle entre l'élément maître et l'élément esclave, chaque élément maître ou esclave interconnecté à chaque liaison par BUS comportant en outre :

- un premier et un deuxième registre d'émission de messages d'instruction et un registre de réception de messages d'instruction, ce qui permet d'assurer à partir de chaque élément maître ou esclave l'émission successive de messages d'instruction sur des cycles d'horloge successifs vers un élément esclave ou maître destinataire, selon une succession de transactions partielles constitutives d'une transaction.

Le protocole et le système de liaison interne par BUS entre éléments constitutifs d'un microcontrôleur, objets de l'invention, trouvent application à l'industrie de l'informatique dans le cadre de la réalisation de stations de travail muni de microcontrôleurs ou de microprocesseurs de très grande puissance de traitement. Ils seront mieux compris à la lecture de la description et à l'observation des dessins ci-après, dans lesquels, outre les figures 1a et 1b relatives à l'art antérieur :

- la figure 2a représente, sous forme d'un schéma synoptique, l'architecture générale d'un système de liaison interne par BUS entre les différents éléments d'un microcontrôleur, conforme à l'objet de la présente invention ;
- la figure 2b représente un chronogramme illustratif des étapes essentielles de transmission de messages permettant la mise en oeuvre du protocole de transmission de données entre éléments constitutifs d'un microcontrôleur conforme à l'objet de la présente invention ;
- les figures 3a et 3b représentent, de manière illustrative, la forme de messages de gestion de conflit d'accès à la liaison par BUS des différents éléments pour l'exécution de transactions successives, ces messages de gestion étant transmis unidirectionnellement d'un élément d'ordre prioritaire donné à tous les éléments d'ordre prioritaire inférieur à cet ordre prioritaire ;
- la figure 4a représente, de manière schématique, un circuit d'interfaçage de la liaison par BUS, objet de l'invention, avec un élément, tel qu'un microprocesseur ;
- la figure 4b représente l'allure générale, dans un exemple non limitatif, du champ principal et du champ auxiliaire d'un message d'instruction ou de réponse émis entre deux éléments maître-esclave d'un microcontrôleur au cours d'une transaction partielle entre ces éléments ;
- les figures 5a à 5d représentent des chronogrammes relatifs à des situations particulières caractéristiques de la transmission de messages d'instruction et de réponse au cours de différentes transactions, conformément au protocole objet de l'invention.

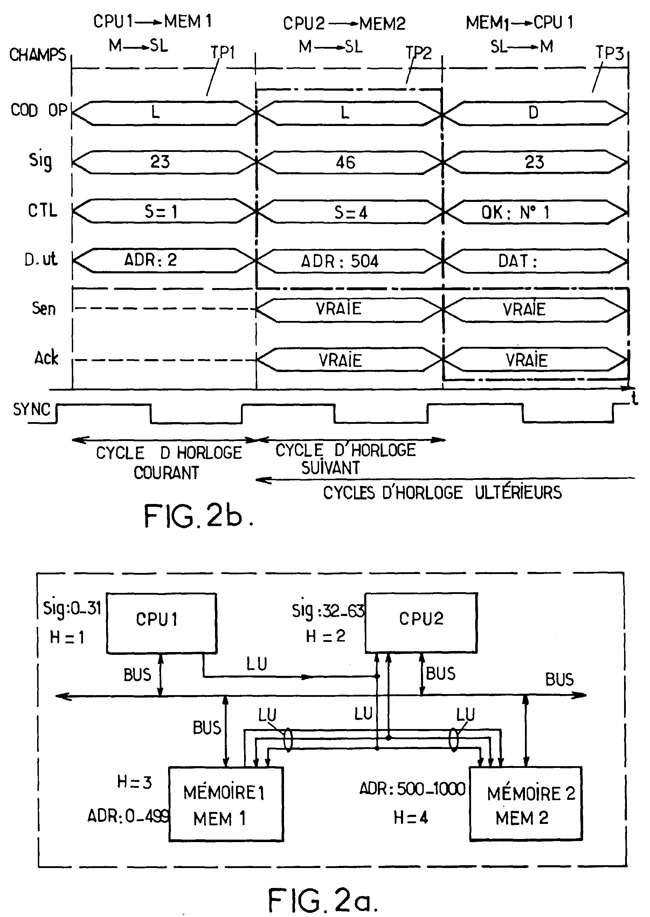

Une description plus détaillée du protocole de transmission de données numériques entre éléments constitutifs d'un microcontrôleur, objet de la présente invention, sera maintenant donnée en liaison avec les figures 2a, 2b et suivantes.

Sur la figure 2a, on a représenté la structure interne d'un microcontrôleur correspondant à la définition précédemment donnée dans la description.

Ainsi, cette structure peut correspondre, soit à une structure monoprocesseur telle que représentée en figure 1a, soit au contraire à une structure multiprocesseurs, c'est-à-dire à l'un des agrégats $A_1$, $A_2$, $A_3$ représenté en figure 1b par exemple. On comprend bien sûr que le nombre de processeurs n'est pas limitatif et qu'à titre d'exemple celui-ci est fixé à deux sur la figure 2a, ces processeurs étant référencés $CPU_1$, $CPU_2$. De même, ces processeurs sont interconnectés par une liaison par BUS à une première mémoire cache de niveau 1, $Mem_1$, et une deuxième mémoire cache de niveau 2, $Mem_2$.

D'une manière particulière non limitative, on indique que chaque élément constitutif du microcontrôleur est muni d'un ensemble d'adresses distinctes dédiées et, ainsi qu'on pourra l'observer sur la figure 2a, à la mémoire $Mem_1$ sont attribuées les adresses 0-499 par exemple et à la mémoire $Mem_2$ les adresses 500 à 1000. Ces mémoires sont, ainsi que mentionné précédemment, des mémoires cache à temps d'accès très faible, inférieur ou égal à 10 ns par exemple.

Le protocole de transmission de données numériques, objet de présente invention, permet, pour chaque élément, tel que représenté en figure 2a, interconnecté à un autre élément du microcontrôleur par l'intermédiaire d'au moins une liaison par BUS de type parallèle, d'assurer au cours d'une transaction la transmission de messages successifs.

D'une manière générale, on donne les définitions ci-après, en liaison avec la figure 2b :

- une transaction partielle, notée sur la figure précitée $TP_1$, $TP_2$ ou $TP_3$ à titre d'exemple entre deux de ces éléments, consiste en l'envoi par un premier élément émetteur, désigné par élément maître M, d'une requête contenant un message d'instruction vers un élément récepteur destinataire de cette requête et désigné par élément esclave SL. D'une manière générale, mais de manière non limitative, les éléments maîtres sont constitués par les microprocesseurs CPU$_1$, CPU$_2$ et les éléments esclaves peuvent être constitués par tous les autres éléments tels que les mémoires Mem$_1$, Mem$_2$ représentées sur la figure 2a, les ports d'entrée-sortie ou autres, bien que ceux-ci ne soient pas représentés sur la figure précitée.

- Une transaction partielle est également constituée par le message de réponse à un message d'instruction et, en conséquence, par tout message de réponse adressé par l'élément esclave SL précité vers l'élément maître M auteur de la requête. En outre, on indique que tout message de réponse comprend essentiellement des données en fonction de la requête qui a été formulée auprès de ce dernier.
- Une transaction, encore désignée par transaction complète, consiste essentiellement en un premier message de requête adressé par l'élément maître M vers l'élément esclave SL et en au moins un message de réponse constituant lui-même une transaction partielle, le cas échéant en une pluralité de ces derniers.

Bien entendu, l'ensemble des messages précités, c'est-à-dire des successions de transactions partielles, est transmis suivant une transmission synchrone à partir d'un signal d'horloge, représenté par SYNC sur la figure 2b, ce signal d'horloge étant bien entendu constitué par une succession d'une pluralité de cycles d'horloge telle que représentée sur la figure précitée. On notera que les instants de début et de fin de chaque transaction partielle TP$_1$ à TP$_3$ sont légèrement décalés par rapport aux transitions du signal d'horloge Sync d'un retard correspondant au temps de propagation des signaux sur les différentes lignes ou BUS de liaison reliant l'ensemble de ces éléments.

Ainsi qu'on l'a représenté en outre en figure 2b, le protocole de transmission de données numériques, objet de la présente invention, consiste en premier lieu à transmettre, à partir d'un élément émetteur de requête, l'élément maître M, vers l'élément esclave SL sur un cycle d'horloge courant, un message d'instruction, lequel est codé sur N+p bits, ce message d'instruction correspondant à une transaction partielle TP$_1$ à TP$_3$ représentée sur la figure 2b.

Le message d'instruction comprend au moins un champ principal codé sur les N bits, ce champ principal comprenant un mot de données utiles communiqué par l'élément maître M à l'élément esclave SL et, d'autre part, un champ auxiliaire codé sur p bits. Ce champ auxiliaire comporte au moins un champ de code opération, noté COD.OP, ce champ de code opération permettant d'identifier le message d'instruction transmis par l'élément maître M à l'élément esclave SL.

D'une manière générale, on indique que les codes opérations permettent en fait l'identification des instructions données par l'élément maître à l'élément esclave, ces instructions pouvant consister en une instruction de chargement de données utiles contenues dans une mémoire cache, constituant l'élément esclave SL, dans l'élément maître M auteur de la requête. A titre d'exemple non limitatif, on indique que le code opération pour l'instruction de chargement est désigné par L et correspond à un message binaire déterminé.

Ainsi qu'on l'a également représenté sur la figure 2b, chaque message d'instruction comporte, en outre, dans le champ auxiliaire, un champ de signature permettant d'identifier l'élément maître M, l'élément esclave destinataire SL de ce message d'instruction ainsi que la transaction intervenant entre cet élément maître et cet élément esclave.

Afin d'assurer la mise en oeuvre de messages de signature adaptés à cette triple fonction, on indique qu'à chaque élément maître M peut être assigné un ensemble de valeurs de signature Sig dédiées, les valeurs de signature 0-31 pour le microprocesseur CPU$_1$ et les valeurs de signature 32-63 par exemple pour le microprocesseur CPU$_2$. On comprend bien entendu que les valeurs correspondantes sont déterminées de manière arbitraire, à chaque valeur arbitraire de l'ensemble considéré étant associé un type de transaction et à l'ensemble de valeurs associé à un élément maître étant associé un élément maître spécifique et un seul.

En ce qui concerne l'identification de l'élément esclave destinataire SL pour la transaction considérée, on indique que cette identification peut être réalisée, ainsi qu'il sera décrit ultérieurement dans la description, par la mise en correspondance bi-univoque d'une valeur de signature pour l'élément maître M considéré et de l'adresse spécifique de l'élément esclave SL précité, auquel le message d'instruction est destiné, la transaction intervenant entre cet élément maître M et cet élément esclave SL.

Bien entendu, le champ principal du message d'instruction contient le mot de données utiles D.ut pour la transaction réalisée, c'est-à-dire les données utiles communiquées par l'élément maître M à l'élément esclave SL lors d'une requête d'instruction, soit encore les données proprement dites transmises par l'élément esclave SL à l'élément maître au cours d'une transaction partielle permettant l'envoi de messages de réponse à l'élément maître M précité.

Ainsi, le mot de données utiles contenu dans le champ principal est constitué par un mot de données d'adresses de l'élément esclave SL destinataire ou par un mot de données numériques à lire, lors d'une transaction de chargement, ou à mémoriser, lors d'une instruction d'écriture en mémoire. Le mot de données utiles de la première transaction partielle entre l'élément maître et l'élément esclave est constitué par les données d'adresse de l'élément esclave, les données d'adresse 0-499 pour la mémoire $Mem_1$ et 500 à 1000 pour la mémoire $Mem_2$ par exemple de l'élément esclave SL concerné.

On indique en outre que toutes les transactions partielles ultérieures constitutives de la même transaction entre le même couple d'éléments maître-esclave comportent un mot de données utiles constitué par les données numériques à lire ou à mémoriser.

Enfin, le protocole, objet de la présente invention, consiste, ainsi que représenté en figure 2b, à transmettre simultanément sur le cycle d'horloge suivant le cycle d'horloge courant, un message de justificatif de transmission, noté Sen, entre l'élément maître M vers l'élément esclave SL, et un message d'accusé de réception, noté Ack, de l'élément esclave SL vers l'élément maître M.

Ainsi que représenté sur la figure 2b, on indique que les messages d'instruction sont ainsi entrelacés dans la mesure où, ainsi que représenté sur la figure précitée, la transaction partielle $TP_1$ émanant de l'élément maître M $CPU_1$ vers l'élément esclave SL, $Mem_1$, est réputée intervenir en premier lieu, sur le cycle d'horloge courant, une deuxième transaction partielle $TP_2$ entre l'élément maître $CPU_2$ et l'élément esclave SL, $Mem_2$, est réputée intervenir sur le cycle d'horloge suivant, cette deuxième transaction partielle constituant en fait la première transaction partielle pour l'élément maître $CPU_2$, et une troisième transaction partielle $TP_3$ est réputée intervenir entre l'élément esclave SL, $Mem_1$, et le processeur $CPU_1$ élément maître M, cette troisième transaction partielle $TP_3$ consistant en fait en un message de réponse à la première transaction partielle $TP_1$.

On constate ainsi que les transactions partielles sont non seulement entrelacées mais également imbriquées dans la mesure où, pour toute transaction partielle intervenant sur un cycle d'horloge courant, le message de justificatif de transmission Sen de l'élément maître M vers l'élément esclave SL correspondant et le message d'accusé de réception Ack de l'élément esclave SL vers l'élément maître d'origine M, ainsi que pour toutes les transactions partielles relatives aux messages de réponse intervenant sur un cycle d'horloge courant ultérieur, les messages de justificatif de transmission et d'accusé de réception correspondants transmis sur le cycle d'horloge suivant ce cycle d'horloge courant et les messages du champ principal et du champ auxiliaire autres que ces messages de justificatif de transmission et d'accusé de réception apparaissent donc imbriqués sur deux cycles d'horloge successifs, le cycle d'horloge courant et le cycle d'horloge suivant, ainsi que représenté sur la figure 2b précitée en traits mixtes, pour les transactions partielles $TP_2$ et $TP_3$.

On indique en outre que la valeur vraie du message de justificatif d'émission et la valeur vraie du message d'accusé de réception permettent de valider la transaction partielle considérée, c'est-à-dire la transaction partielle intervenue sur le cycle d'horloge courant, laquelle est alors validée sur le cycle d'horloge suivant.

On comprend bien entendu que les étapes précédemment mentionnées dans la description peuvent alors être répétées sur au moins un cycle d'horloge ultérieur au cycle d'horloge courant entre le même couple d'éléments maître-esclave, c'est-à-dire entre le couple $CPU_1$ et $Mem_1$, ou respectivement $CPU_2$ et $Mem_2$, ainsi qu'entre au moins un couple d'éléments maître-esclave différents, c'est-à-dire par exemple dans le cas non limitatif de la figure 2a, entre le processeur $CPU_1$ et la mémoire $Mem_2$ respectivement le processeur $CPU_2$ et la mémoire $Mem_1$, afin d'assurer l'exécution de transactions partielles successives, constitutives de transactions successives entre ces couples d'éléments maître-esclave.

Ainsi qu'on l'a en outre représenté en figure 2b, on indique que, de façon à assurer une gestion complète des transactions partielles et finalement de l'ensemble des transactions réalisées entre les différents couples d'éléments constitutifs du microcontrôleur, le champ auxiliaire peut être muni d'un champ de contrôle, noté CTL, permettant de gérer chaque transaction partielle et chaque transaction. Le champ de contrôle précité peut consister en un codage d'informations relatif à la taille de la transaction, c'est-à-dire finalement au nombre de mots de données utiles D.ut, constitutive d'une transaction déterminée. Dans l'exemple donné sur la figure 2b, on indique que la transaction entre l'élément maître $CPU_1$ et l'élément esclave $Mem_1$ consiste simplement en une transaction de taille S = 1, c'est-à-dire en un seul mot de données utiles. Dans ce cas, le message de réponse constitué par la transaction partielle $TP_3$ peut comprendre, dans le champ de contrôle CTL, un message de validation du mot transmis, ce message de validation pouvant comporter en particulier le numéro du mot transmis et permettant ainsi de donner une indication de fin de transaction lorsque, en particulier, le numéro du mot transmis correspond à la taille, en nombre de mots, de la première transaction $TP_1$ ou message de requête d'instruction correspondante.

A titre d'exemple non limitatif, on indique que :

- le champ principal contenant le mot de données utiles, c'est-à-dire le mot d'adresse ou le mot de données lues ou écrites, peut être codé sur N = 32 bits ;
- le champ auxiliaire peut avantageusement consister en :
- un champ de code opération codé sur 3 bits,
- un champ de signature codé par exemple sur 6 bits,
- un champ de contrôle CTL codé par exemple sur 5 bits,
- les champs de messages de justificatif d'émission et d'accusé de réception chacun codés sur un bit.

Le mode opératoire général du protocole objet de la présente invention, est alors le suivant :

- la première transaction partielle $TP_1$ permet la transmission par l'élément maître M d'un message d'instruction dans lequel sont associés en correspondance bi-univoque la signature relative à la transaction demandée par cet élément maître et l'adresse de l'élément esclave SL destiné à recevoir la requête correspondante ;

- l'élément esclave SL correspondant reçoit le message d'instruction précité en raison de l'adresse sélective qui lui a été attribuée, et mémorise alors la valeur de la signature contenue dans le champ de signature du message reçu dans ses circuits de mémorisation interne. Cette valeur de signature est maintenue mémorisée par l'élément esclave SL tant que la fin de la transaction n'est pas intervenue, c'est-à-dire tant que l'élément esclave SL n'a pas émis la dernière transaction partielle pour laquelle le dernier mot correspondant au nombre de mots contenus dans le champ de contrôle CTL, par exemple la taille S = 4 pour la transaction entre le processeur $CPU_2$ et la mémoire $Mem_2$ représentés en figure 2b, n'a pas été émis et que le message d'accusé de réception Ack n'a pas été émis sur le cycle d'horloge suivant le cycle d'horloge courant précité. On comprend bien sûr que dans le cas de l'exemple non limitatif de la figure 2b, le cycle d'horloge courant pour la transaction $CPU_1$, $Mem_1$ correspond à la transaction partielle $TP_1$, que le cycle d'horloge suivant ce cycle d'horloge courant constitue en fait le cycle d'horloge courant pour la transaction partielle $TP_2$ relative au processeur $CPU_2$ et à la mémoire $Mem_2$, et ainsi de suite pour les cycles d'horloge successifs.

On comprend également, les cycles d'horloge étant successifs et non disjoints, qu'en conséquence, les transactions partielles sont également successives et non disjointes, mais que les messages de réponse à une requête peuvent par contre être disjoints, c'est-à-dire réalisés sur des cycles d'horloge ultérieurs et espacés d'un nombre quelconque de cycles d'horloge et de transactions partielles. Le mode opératoire effectif du protocole objet de la présente invention sera décrit ultérieurement dans la description dans quatre cas spécifiques, afin de donner une meilleure illustration des différents modes opératoires possibles.

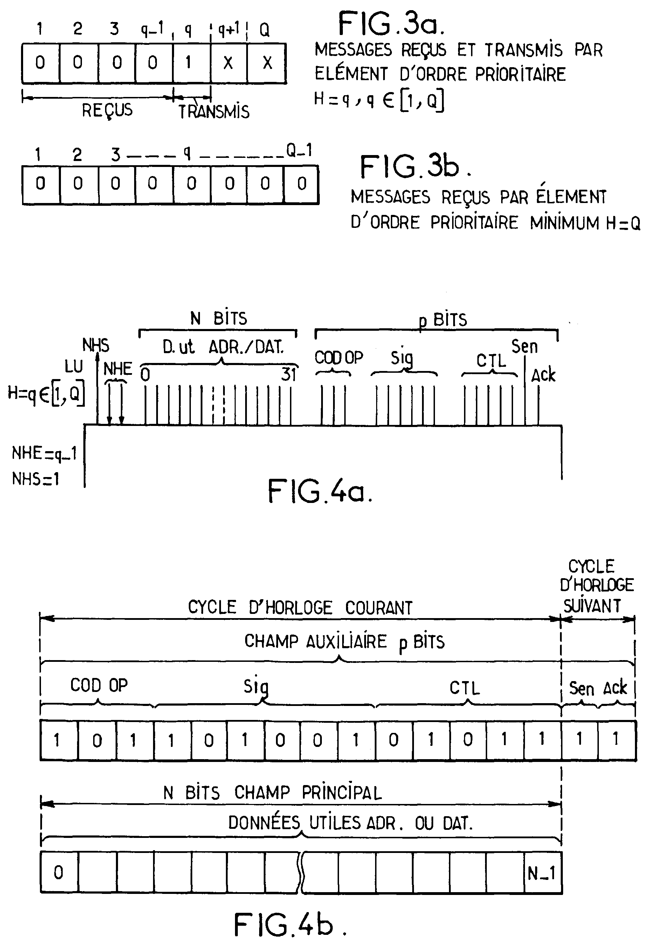

On comprend bien sûr qu'afin d'assurer l'absence de conflit d'émission de messages entre les différents éléments constitutifs du microcontrôleur précité, en particulier lorsque le nombre d'éléments constitutifs de ce microcontrôleur est particulièrement important, un seul message devant être présent sur la liaison par BUS à n+p bits précédemment décrite dans la description, un message étant constitué sur un cycle d'horloge courant par le champ principal et par le champ auxiliaire comprenant les messages de justificatif d'émission et d'accusé de réception de la transaction partielle précédente, le protocole objet de la présente invention peut comporter une procédure de gestion des conflits d'accès à l'émission de messages des différents éléments constitutifs du microcontrôleur. Dans ce but, ainsi que représenté an figures 3a et 3b, le protocole objet de la présente invention consiste à affecter à chaque élément constitutif de ce microcontrôleur un ordre prioritaire de transaction. Sur la figure 2a, on indique que l'ordre prioritaire de transaction est désigné par la variable H correspondant à un coefficient hiérarchique. A titre d'exemple non limitatif, le processeur $CPU_1$ bénéficie du coefficient prioritaire ou hiérarchique H = 1 de valeur la plus faible mais correspondant à la hiérarchie la plus élevée, le processeur $CPU_2$ bénéficie d'une valeur de coefficient hiérarchique ou prioritaire H = 2, valeur plus élevée mais correspondant à une priorité plus faible, et ainsi de suite pour les éléments esclave, $Mem_1$ et $Mem_2$ pour lesquels la valeur du coefficient hiérarchique est H = 3, H = 4. La valeur des coefficients est arbitraire et correspond dans ce cas particulier à une valeur la moins élevée pour une priorité ou hiérarchie la plus grande, et réciproquement.

Chacun des éléments précités étant muni du coefficient hiérarchique ou prioritaire précité, le protocole objet de la présente invention consiste alors à transmettre, à partir de chaque élément d'ordre prioritaire supérieur, un message d'autorisation ou d'absence d'autorisation de transaction vers tous les éléments maître-esclave d'ordre prioritaire inférieur. Ce message d'autorisation ou d'absence d'autorisation de transaction constitue en fait pour chaque élément d'ordre prioritaire supérieur précité une instruction de désistement d'accès à la transmission de transactions partielles au bénéfice de tous les éléments d'ordre prioritaire inférieur.

Sur les figures 3a et 3b, on a représenté de tels messages pour un nombre de coefficients hiérarchiques H = q , q $\in$ [1,Q], q désignant la valeur du coefficient hiérarchique H pour l'élément considéré.

Compte tenu de la transmission du message d'autorisation ou d'absence d'autorisation de transaction précité vers tous les éléments maître-esclave d'ordre prioritaire inférieur, on indique, ainsi que représenté en figure 3a, que tout élément auquel a été affecté un coefficient hiérarchique H = q reçoit en fait un message d'autorisation ou d'absence d'autorisation de transaction de tous les éléments d'ordre hiérarchique supérieur, c'est-à-dire dont les valeurs de coefficient hiérarchique ou prioritaire est compris entre 1 et q-1, alors que ce même élément dont le coefficient hiérarchique est égal à H = q transmet lui-même un message d'autorisation ou d'absence d'autorisation de transaction vers tous les éléments maître-esclave d'ordre prioritaire inférieur, c'est-à-dire dont le coefficient hiérarchique ou prioritaire est H $\in$ [q+1,Q].

Conformément à un aspect particulièrement avantageux du protocole objet de la présente invention, on indique que chaque élément d'ordre prioritaire donné q est alors habilité à opérer une transaction sous autorisation conditionnelle par l'ensemble des éléments d'ordre prioritaire supérieur à cet ordre prioritaire donné, c'est-à-dire par l'ensemble des éléments dont le coefficient hiérarchique ou prioritaire est à la valeur $H \in [1,q-1]$.

Selon un autre aspect particulier du protocole objet de la présente invention, on indique que l'élément d'ordre prioritaire minimum, c'est-à-dire celui pour lequel $H = Q$, reçoit l'ensemble des messages d'autorisation de transaction délivrés par les éléments d'ordre prioritaire supérieur, c'est-à-dire l'ensemble des messages d'autorisation ou d'absence d'autorisation de transaction délivrés par les éléments dont le coefficient hiérarchique ou de priorité est tel que $H \in [1,Q-1]$.

Selon un aspect particulier du protocole objet de la présente invention, on indique que l'élément d'ordre prioritaire minimum $H = Q$ est habilité, soit à n'opérer aucune transaction, soit à opérer au moins une transaction arbitraire sous autorisation conditionnelle de l'ensemble des éléments d'ordre prioritaire supérieur.

Dans un mode de réalisation particulier, on indique que l'autorisation conditionnelle de l'ensemble des éléments d'ordre prioritaire supérieur est obtenue pour la valeur complémentée de la valeur vraie, valeur zéro, de tous les messages d'autorisation de transaction délivrés par ces éléments d'ordre prioritaire supérieur. Ainsi que représenté sur la figure 3a notamment, on indique alors que l'élément dont le coefficient hiérarchique $H = q$ est habilité à émettre une transaction partielle lorsque l'ensemble des messages d'autorisation de transaction délivrés par tous les éléments d'ordre hiérarchique supérieur a la valeur zéro et que le message d'autorisation ou d'absence d'autorisation de transaction délivré par cet élément dont le coefficient hiérarchique $H = q$ a lui-même la valeur 1, ces messages étant délivrés à tous les éléments dont le coefficient d'ordre hiérarchique correspond à un ordre inférieur. La valeur 1 de ce message permet alors d'inhiber l'émission d'un message de requête ou de réponse par tous les éléments hiérarchiquement inférieurs, alors que tous les éléments hiérarchiquement supérieurs se sont désistés au profit de l'élément dont le coefficient hiérarchique est égal à q.

En ce qui concerne l'élément d'ordre prioritaire minimum, ainsi que représenté en figure 3b, c'est-à-dire l'élément dont le coefficient hiérarchique a la valeur Q, celui-ci reçoit tous les messages d'autorisation ou d'absence d'autorisation de transaction délivrés par les éléments dont le coefficient hiérarchique a pour valeur $H \in [1,Q-1]$. Ce dernier élément n'émet bien entendu aucun message d'autorisation ou d'absence d'autorisation de transaction. Il ne peut par contre émettre une transaction partielle que lorsque l'ensemble des messages d'autorisation ou d'absence d'autorisation qu'il reçoit a pour valeur le complément de la valeur vraie, c'est-à-dire la valeur zéro.

Dans un tel cas et en fonction de l'activité de l'élément, du point de vue de l'émission d'un message d'émission de réponse par exemple, on indique que, en l'absence d'émission d'un message de réponse à une requête d'un élément maître, ce dernier élément d'ordre prioritaire minimum émet alors systématiquement sur le BUS de liaison une transaction partielle arbitraire, constituant d'ailleurs une transaction dans la mesure où celle-ci n'appelle aucune réponse d'un autre élément. Cette transaction est définie par un code opération particulier, désigné par Nop.

Le message correspondant à la transaction arbitraire présente alors un caractère simplifié dans la mesure où il comprend uniquement le code opération précité et, le cas échéant, une adresse fictive permettant à tous les éléments de hiérarchie supérieure à cet élément d'ordre prioritaire minimum de recevoir un tel message de transaction arbitraire. Un tel mode opératoire permet en fait de gérer l'ensemble de la liaison ainsi réalisée en permettant à tout élément d'ordre hiérarchique supérieur de reprendre la main pour l'envoi d'un message de requête par exemple.

Une description plus détaillée d'un circuit d'interfaçage de la liaison par BUS, objet de la présente invention, c'est-à-dire finalement du port d'entrée-sortie parallèle assurant l'interconnexion entre un élément maître et un élément esclave précédemment décrits dans la description, sera donnée en liaison avec la figure 4a.

Ainsi qu'on l'observera sur la figure précitée, le circuit d'interfaçage comprend N lignes d'entrée en parallèle, permettant la transmission du champ principal codé sur N bits, et bien entendu les p lignes parallèles permettant la transmission du champ auxiliaire codé sur p bits.

Ainsi, dans le mode de réalisation précédemment décrit, le circuit d'interfaçage peut comprendre en parallèle les trois conducteurs permettant la transmission du champ code opération COD.OP, six conducteurs permettant la transmission du champ de signature, cinq conducteurs permettant la transmission du champ de contrôle CTL, et deux conducteurs permettant la transmission du champ de justificatif d'émission Sen et du champ d'accusé de réception Ack.

En outre, on indique que le circuit d'interfaçage précité comprend une liaison unidirectionnelle dont le nombre de conducteurs dépend du coefficient hiérarchique attribué à l'élément considéré.

Sur la figure 4a, on a représenté de manière non limitative le circuit d'interfaçage et la ligne unidirectionnelle LU pour un coefficient hiérarchique $H = q = 3$ de la figure 2a, c'est-à-dire pour la mémoire $Mem_1$. Cette ligne unidirectionnelle LU comprend alors un nombre de conducteurs recevant les messages d'autorisation ou d'absence d'autorisation d'émission des éléments dont le coefficient hiérarchique est supérieur, soit un nombre de conducteurs entrants $NHE = q-1$, cette ligne unidirectionnelle LU étant en outre complétée par une ligne permettant la transmission du message d'autorisation ou d'absence d'autorisation de transaction vers les éléments dont la hiérarchie est inférieure. Le nombre de conducteurs sortants est NHS = 1 pour tous les éléments sauf celui dont le coefficient hiérarchique est minimum, pour lequel le nombre de conducteurs sortants NHS est égal à zéro.

L'allure des messages transmis sur le BUS parallèle N+p bits est donnée en figure 4b pour le cycle d'horloge courant et le cycle d'horloge suivant.

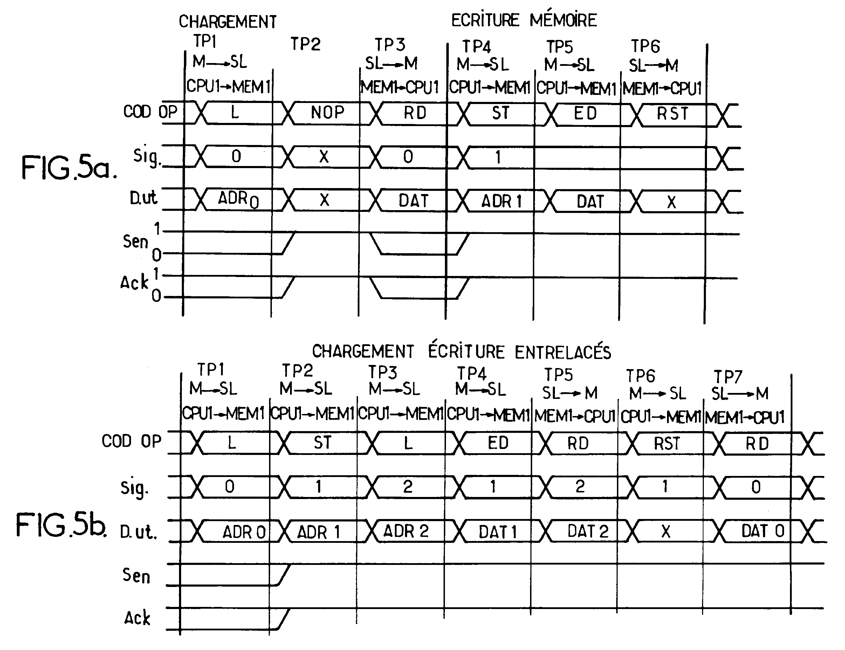

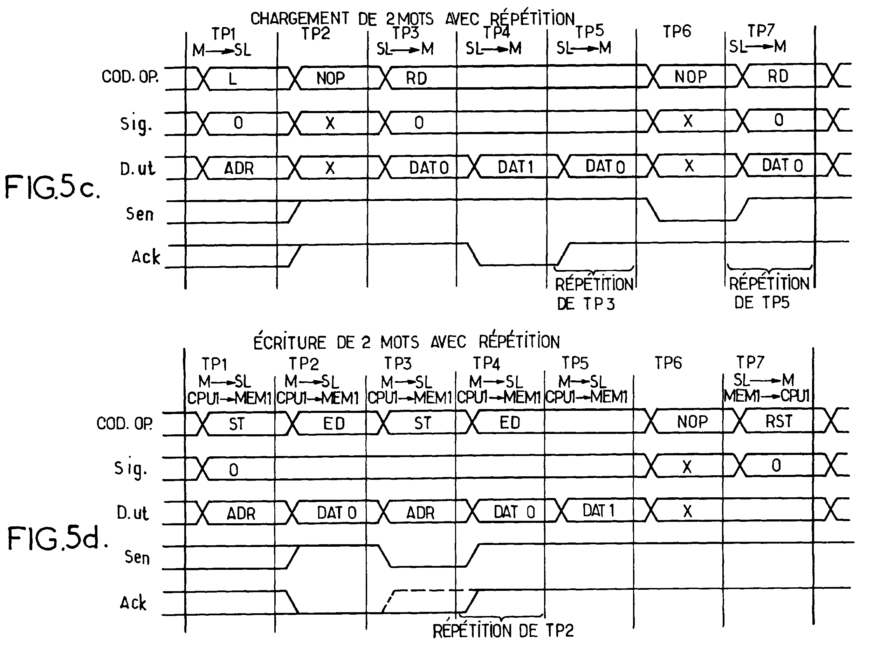

Une description plus détaillée de quatre exemples spécifiques correspondant à des cas particuliers significatifs de transmission de transactions partielles sera donnée en liaison avec les figures 5a à 5d.

La figure 5a représente le cas où un élément maître, tel que le processeur $CPU_1$, adresse successivement à un élément esclave la mémoire $Mem_1$ par exemple, une instruction de chargement puis une instruction d'écriture.

Les instructions de chargement et d'écriture en mémoire précitées sont réputées être exécutées en l'absence d'erreur de transmission ou de codage des données correspondantes, c'est-à-dire que chaque transaction partielle nécessaire à la mise en oeuvre de ces opérations sur un cycle d'horloge courant est suivie sur un cycle d'horloge suivant de messages de justificatif d'émission Sen et d'un message d'accusé de réception Ack à la valeur vraie.

Dans le cas de l'instruction de chargement et à titre d'exemple purement illustratif, la transaction correspondante est réputée réalisé sur trois transactions partielles successives, les transactions partielles $TP_1$, $TP_2$ et $TP_3$.

La transaction partielle $TP_1$ correspond à l'envoi par le processeur $CPU_1$ d'un message de requête de chargement comprenant un champ de code opération L indicatif du chargement, un champ de signature pris à la valeur zéro par exemple, et un champ de données utiles correspondant à l'adresse $ADR_0$ de la mémoire $Mem_1$. Pendant la transaction partielle $TP_1$, cette transaction partielle étant présumée la première, ou suivant une transaction arbitraire émise par l'élément dont la hiérarchie est la moins élevée, ainsi que mentionné précédemment dans la description, les messages de justificatif d'émission et d'accusé de réception Sen, Ack sont au complément de la valeur vraie, c'est-à-dire à la valeur zéro.

La transaction partielle suivante $TP_2$ correspond, à titre purement illustratif, à une transaction arbitraire, c'est-à-dire une transaction en l'absence d'opération. Cette transaction partielle correspond à un champ de code opération Nop et à une signature et à des données utiles non significatives, et pour cette raison désignées par X. La transaction partielle suivante $TP_3$ correspond à un message de réponse de l'élément esclave SL vers l'élément maître M, c'est-à-dire de la mémoire $Mem_1$ vers le processeur $CPU_1$. Le message de réponse transmis comprend alors un champ de code opération significatif de données en réponse RD et dans le champ signature, un message de signature identique à celui de la transaction partielle $TP_1$, alors que le champ de données utiles D.ut comprend les données lues dans la mémoire à l'adresse indiquée dans le champ de données utiles de la transaction partielle $TP_1$.

En outre, au cours de cette transaction partielle $TP_3$ et en raison du fait que le message transmis au cours de la transaction précédente partielle $TP_2$ était un message d'absence d'opération ou message arbitraire Nop, les messages de justificatif d'émission et d'accusé de réception transmis pendant la transaction $TP_3$ correspondent à la valeur complémentée de la valeur vraie.

La transaction suivante concerne une instruction d'écriture en mémoire sur les transactions partielles $TP_4$, $TP_5$ et $TP_6$.

Une telle transaction est également réputée réalisée sur trois transactions partielles. La première transaction partielle $TP_4$ de la transaction relative à l'écriture en mémoire est une requête d'écriture transmise par le processeur $CPU_1$ vers la mémoire $Mem_1$ par exemple. Cette requête est une requête d'instruction d'écriture comportant un code opération correspondant, désigné par ST, un message de signature de valeur donnée égale à 1 par exemple, et dans le champ principal, un message d'adresse correspondant à l'adresse $ADR_1$ de la mémoire $Mem_1$ où les données à inscrire devront être mémorisées. En raison des antécédents de la transaction partielle $TP_3$ où l'opération de chargement précédente avait été exécutée, les messages relatifs au justificatif d'émission et d'accusé de réception Sen et Ack sont tous deux à la valeur vraie.

La transaction partielle suivante, $TP_5$, correspond à une instruction de communication par l'élément maître $CPU_1$ des données à inscrire dans la mémoire $Mem_1$. Le message transmis comprend un champ de code opération de transmission ou d'envoi de données ED, un champ de signature dont la valeur de signature est identique au champ de signature de la transaction partielle précédente $TP_4$, et un champ de données utiles contenant les données à inscrire dans la mémoire $Mem_1$. En raison de l'exécution de l'instruction d'écriture à la transaction partielle précédente $TP_4$, on comprend que lors de la transaction $TP_5$, les messages de justificatif d'émission Sen et d'accusé de réception Ack sont également à la valeur vraie.

Enfin, la dernière transaction partielle $TP_6$ relative à la transaction d'écriture en mémoire représentée en figure 5a, consiste en un message de réponse de l'élément esclave SL vers l'élément maître M, c'est-à-dire de la mémoire $Mem_1$ vers le processeur $CPU_1$. Ce message de réponse comprend un champ de code opération de restitution des statuts RST, un message de signature identique, c'est-à-dire à la valeur 1 donnée à titre d'exemple pour les deux transactions partielles antérieures $TP_4$ et $TP_5$, et un champ de données utiles non significatif, désigné pour cette raison par la valeur X. Compte tenu de l'exécution de la transaction partielle

antérieure TP$_5$, les messages de justificatif d'émission et d'accusé de réception Sen et Ack sont également à la valeur vraie.

On constate ainsi que le champ de signature permet dans tous les cas d'adresser toute transaction partielle constitutive d'une transaction à l'élément esclave choisi, grâce à la mise en correspondance bi-univoque de cette valeur de signature avec l'adresse de cet élément esclave choisi lors de la requête d'instruction transmise par l'élément maître M vers l'élément esclave SL au cours de la transmission de la première transaction partielle.

La figure 5b représente une situation dans laquelle des instructions successives de chargement-écriture de données et leur réponse sont transmises par un élément maître, tel que le microprocesseur CPU$_1$, et un élément esclave, tel que la mémoire Mem$_1$ par exemple, ou le cas échéant, par des éléments maîtres distincts, CPU$_1$, CPU$_2$, tels que représentés en figure 2a. A titre d'exemple non limitatif, on décrira la figure 5b dans le cas où les transactions partielles successives sont engendrées par un seul microprocesseur CPU$_1$ vers la première ou la deuxième mémoire cache Mem$_1$, Mem$_2$, ou l'une de celles-ci, dans les conditions ci-après :

- la première transaction partielle TP$_1$ est réputée consister en un message d'instruction de chargement comportant le champ de message code opération L, un champ de signature de valeur arbitraire zéro correspondant à ce chargement pour ce microprocesseur CPU$_1$, et un champ de données utiles D.ut correspondant à une valeur d'adresse, notée ADR$_0$, valeur d'adresse de la première mémoire cache Mem$_1$ par exemple, à partir de laquelle les données mémorisées à cette adresse doivent être chargées dans les registres de l'unité centrale CPU$_1$. Cette transaction partielle TP$_1$ étant réputée la première, le champ des messages de justificatif de transmission et d'accusé de réception Sen et Ack sont à la valeur complémentée de la valeur vraie.

- La deuxième transaction partielle TP$_2$ intervient au cycle d'horloge suivant et correspond par exemple à une instruction d'écriture transmise par la même unité centrale CPU$_1$ à la même mémoire cache Mem$_1$, bien entendu à une adresse distincte ADR$_1$. Le message d'instruction correspondant comprend un code opération ST, une valeur de signature distincte de la précédente, égale à 1, et dans le champ des données utiles, la valeur d'adresse de la mémoire cache Mem$_1$ à laquelle l'inscription des données correspondantes devra être effectuée. Le champ du message de justificatif de transmission et de justificatif d'accusé de réception sur ce cycle d'horloge suivant le cycle d'horloge courant de la transaction partielle précédente TP$_1$ est alors égal à la valeur vraie, la transaction partielle précédente

TP$_1$ étant réputée valablement exécutée.

- La transaction partielle TP$_2$ est elle-même suivie d'une troisième transaction partielle TP$_3$ consistant à nouveau par exemple en une instruction de chargement dans l'unité centrale CPU$_1$. Le message d'instruction correspondant à cette transaction partielle comprend un champ de code opération L, un champ de signature de valeur arbitraire égale à 2. On notera en particulier que la valeur de la signature pour la même instruction de chargement que dans le cas de la transaction partielle TP$_1$, pour le même microprocesseur ou unité centrale CPU$_1$, est différente. En effet, une même valeur de signature pour un même élément maître et pour une même instruction ne peut être attribuée par cet élément maître que lorsque l'ensemble des réponses à une requête antérieure relative à une même instruction a été reçu et que la transaction correspondante est donc valablement exécutée. Bien entendu, le champ des données utiles de la deuxième transaction partielle TP$_2$ comprend une valeur d'adresse ADR$_2$ de la même première mémoire cache, cette valeur d'adresse étant différente de la valeur d'adresse de la transaction partielle précédente TP$_2$. Au cours de cette transaction partielle TP$_3$, les messages de justificatif de transmission et d'accusé de réception sont également à la valeur vraie, la transaction précédente étant réputée valablement exécutée.

- La transaction partielle suivante TP$_4$ est un message de confirmation de l'instruction d'écriture donnée par l'élément maître CPU$_1$ à la mémoire cache Mem$_1$ au cours de la transaction partielle TP$_2$. Le message de confirmation comprend un champ de code opération correspondant à une entête d'envoi de données ED, un champ de signature de même valeur que celui du champ de signature du message d'instruction correspondant lors de la transaction partielle TP$_2$, et bien entendu, un champ de données utiles constitué par les données désignées par DAT$_1$ à inscrire en mémoire à l'adresse ADR$_1$ de la première mémoire cache Mem$_1$. On note que cette transaction partielle TP$_4$ ne termine pas la transaction entre l'unité centrale CPU$_1$ et la mémoire cache Mem$_1$ pour l'instruction d'écriture donnée par cette unité centrale lors de la transaction partielle TP$_2$. Les messages Sen et Ack sont également réputés correspondre à la valeur vraie.

- La transaction suivante TP$_5$ constitue un message de réponse à l'instruction de chargement engendrée par l'unité centrale CPU$_1$ au cours de la transaction partielle TP$_3$. Le message de réponse comprend un champ de code opération de données en réponse RD, un champ de signature comportant une valeur de signature identique à celle de la valeur de signature correspondante du message d'instruction engendré au cours de la transaction partielle TP$_3$, et un champ de données utiles D.ut correspondant à des données destinées à être chargées dans l'unité centrale $CPU_1$ à partir de l'adresse $ADR_2$ de la mémoire cache $Mem_1$. On notera que ce message de réponse termine la transaction de chargement ainsi constituée par la transaction partielle $TP_3$ et la transaction partielle $TP_5$.

- La transaction partielle $TP_6$ suivante est réputée correspondre à un message de réponse de communication de statuts de la mémoire cache $Mem_1$ ayant reçu l'instruction d'écriture lors de la transaction partielle $TP_2$, reçu les données à écrire en mémoire au cours de la transaction partielle $TP_4$, et, suite à la réalisation de cette inscription, transmettant le message de réponse d'exécution au cours de la transaction partielle $TP_6$. Ce message de réponse comprend ainsi un champ de code opération de réponse de statuts RST, un champ de signature comportant une valeur de signature égale à celle contenue dans les champs de signature des transactions $TP_2$ et $TP_4$. Le champ de données utiles par contre n'est pas significatif, et pour cette raison, porte la mention X. La transaction partielle $TP_6$ termine la transaction relative à une instruction d'écriture constituée par la transaction partielle $TP_2$, la transaction partielle $TP_4$, et la transaction partielle $TP_6$.

- Enfin, la dernière transaction partielle $TP_7$ n'est autre qu'un message de réponse de l'élément esclave SL constitué par la mémoire cache $Mem_1$ à l'unité centrale $CPU_1$, à la requête de chargement engendrée lors de la transaction partielle $TP_1$. Cette dernière transaction partielle $TP_7$ comprend un champ de code opération relatif aux données en réponse RD, un champ de signature comportant une valeur de signature égale à celle de la première transaction $TP_1$, et un champ de données utiles constitué par les données lues à l'adresse $ADR_0$ de la mémoire cache $Mem_1$ et chargées dans l'unité centrale $CPU_1$, ces données étant désignées par $DAT_0$. Cette dernière transaction partielle termine la transaction de chargement formée par les transactions partielles $TP_1$ et $TP_7$.

Dans le cas de la figure 5b, on indique à titre d'exemple non limitatif que toutes les transactions partielles ont été exécutées sur le premier cycle d'horloge qui leur a été assigné et qu'en conséquence, les messages d'accusé de réception et de justificatif de transmission Ack, Sen, sont tous à la valeur vraie à partir de la deuxième transaction partielle $TP_2$.

Les figures 5c et 5d représentent, à titre d'exemple non limitatif, une situation dans laquelle la transmission des données entre éléments n'est pas exécutée valablement, soit en raison d'un défaut de transmission de message entre l'élément maître M et l'élément esclave SL, le message de justificatif de transmission étant alors à la valeur complémentée de la valeur vraie, soit, au contraire, en raison d'un défaut d'exécution ou de réception de toute instruction par l'élément esclave, le message d'accusé de réception étant alors à la valeur complémentée de la valeur vraie.

La figure 5c correspond en particulier à une instruction de chargement de données utiles constituées par deux mots, chaque mot étant bien entendu codé sur les N bits du champ principal. On comprend bien sûr que pour tout message constitué d'une pluralité de mots, il est bien entendu nécessaire de transmettre des messages de réponse successifs, lesquels peuvent être entrelacés sur des cycles d'horloge ultérieurs avec d'autres messages d'instruction ou de réponse, ainsi que déjà mentionné précédemment en liaison avec la figure 5b.

Dans la situation représentée en figure 5c, on indique que la première transaction partielle $TP_1$ correspond à une instruction de chargement réputée valablement exécutée, les messages de justificatif de transmission et d'accusé de réception étant à la valeur vraie sur la transaction partielle suivante $TP_2$. A titre d'exemple non limitatif, la transaction précitée $TP_2$ correspond par exemple à une transaction arbitraire présentant un code opération NOP. La transaction partielle suivante $TP_3$ correspond à un premier message de réponse adressé par la mémoire d'adresse ADR dont la valeur est contenue dans le champ de données utiles de la première transaction partielle $TP_1$. On comprend bien entendu que ce premier message de réponse comprend un code opération RD indiquant l'existence de données en réponse, une valeur de signature dans le champ de signature identique à celle de la valeur contenue dans le champ de signature de la première transaction partielle $TP_1$, et enfin le premier mot de données utiles noté $DAT_0$, lequel est donc transmis vers l'élément maître M demandeur de chargement. Pendant la transaction partielle $TP_3$, les messages de justificatif de transmission et d'accusé de réception sont réputés à la valeur vraie, la transaction partielle précédente $TP_2$ ayant été réputée exécutée.

Lors de la transaction partielle suivante $TP_4$, un deuxième message de réponse de la mémoire destinataire de la requête de chargement est exécuté. Ce deuxième message de réponse est normalement destiné à transmettre le deuxième mot constitutif du message de données utiles complet. Le message de réponse de la transaction partielle $TP_4$ comprend ainsi un même code opération RD que le message précédent, transaction $TP_3$, une même valeur de signature dans le champ de signature puisque, tant l'élément maître que l'élément esclave et la transaction sont identiques, seul le rang du mot à transmettre étant distinct. Le champ principal de données utiles comprend le deuxième mot, noté $DAT_1$.

En ce qui concerne toutefois les valeurs des champs de messages de justificatif de transmission et d'accusé de réception, on indique que, bien que le message de justificatif de transmission soit à la valeur vraie, le message d'accusé de réception de la transaction par-

tielle $TP_4$ est réputé à la valeur complémentée de la valeur vraie en raison du fait que le message de réponse de transmission du premier mot $DAT_0$ transmis par l'élément esclave vers l'élément maître au cours de la transaction $TP_3$ est réputé n'avoir pas été reçu par l'élément maître précité.

Dans ces conditions, le message de réponse visant à transmettre le premier mot de données $DAT_0$ peut alors être répété à la transaction partielle $TP_5$ suivante. Le message de répétition comprend bien entendu un code opération identique RD, une valeur de signature identique égale à zéro pour les raisons indiquées précédemment, et un champ de données utiles correspondant au premier mot $DAT_0$. On indique par contre que la transmission et la réception du deuxième mot $DAT_1$ ayant été réputée exécutée à la transaction partielle précédente $TP_4$, les messages de justificatif de transmission et d'accusé de réception de la transaction partielle suivante $TP_5$ sont réputées à la valeur vraie.

La transaction partielle suivante $TP_6$ est réputée constituée par une transaction arbitraire dont le code opération est NOP.

Toutefois, et à titre de pur exemple, la transaction partielle $TP_5$ de répétition du message de transmission du premier mot $DAT_0$ est réputée n'avoir pas été exécutée suite par exemple à une erreur sur envoi du premier mot $DAT_0$ par l'élément esclave, c'est-à-dire par la mémoire $Mem_1$ par exemple. Dans ces conditions, le message de réponse relatif à la transmission du premier mot $DAT_0$ est alors répété à nouveau lors de la transaction partielle suivante $TP_7$, lequel comporte alors le code opération RD, la même valeur de signature zéro que lors des transactions partielles $TP_1$, $TP_3$ à $TP_5$, et bien entendu, le mot répété $DAT_0$. La transaction partielle de réponse $TP_7$, est elle-même réputée, dans l'exemple de la figure 5c, valablement exécutée.

Sur la figure 5c, on indique que le champ de contrôle permettant la gestion des transactions partielles successives et, le cas échéant, la transmission de différents mots constitutifs d'un message complet, n'a pas été représenté afin de ne pas surcharger le dessin. On comprend bien sûr que, au niveau de l'élément esclave SL par exemple, le champ de contrôle du message d'instruction reçu comportant le nombre de mots constitutifs du message total, est mémorisé au niveau des structures internes de l'élément esclave de façon à réaliser un compteur de décalage d'adresses permettant de lire et transmettre successivement les différents mots.

La figure 5d reprend, à titre d'exemple non limitatif, une situation analogue à celle de la figure 5c dans laquelle toutefois l'instruction répétée concerne non plus le chargement mais l'écriture de deux mots par exemple.

Ainsi qu'on pourra l'observer sur la figure 5d, le message d'instruction d'écriture est transmis par l'élément maître lors de la transaction partielle $TP_1$, ce message d'instruction comportant les attributs de code opération, de signature et d'adresse ADR correspondants.

Lors de la transaction partielle suivante $TP_2$, l'élément esclave à l'adresse ADR ne confirme pas la réception de l'instruction d'écriture correspondante, le message d'accusé de réception Ack étant par conséquent à la valeur complémentée de la valeur vraie, la valeur zéro. Le message de données en réponse $DAT_0$ qui a pu être émis de façon complète ou non au cours de la transaction partielle $TP_2$ par l'élément maître n'est à son tour pas confirmé par le message de justificatif de transmission Sen à la transaction partielle suivante $TP_3$. Au cours de cette transaction partielle précitée, l'instruction d'écriture est répétée par l'élément maître vers l'élément esclave concerné. Le message d'instruction comprend bien entendu un champ code opération ST, la valeur de signature dans le champ de signature correspondant à la même valeur que lors de la transaction partielle $TP_1$, et bien entendu, dans le champ des données utiles, la même valeur d'adresse ADR qui permettra de répéter l'opération d'instruction d'écriture.

La transmission du premier mot de données $DAT_0$ à la transaction partielle $TP_2$ n'ayant pas été confirmée, notamment en raison de la valeur complémentée de la valeur vraie, valeur zéro, du message justificatif de transmission, un message de transmission de ces données par l'élément maître vers l'élément esclave, c'est-à-dire la mémoire cache $Mem_1$, est répété à la transaction partielle suivante $TP_4$. Ce message de transmission de données comprend le code opération ED d'écriture de données, la valeur de signature identique à celle des transactions précédentes $TP_1$ à $TP_3$ et bien entendu le premier mot de données utiles à inscrire $DAT_0$. Le message d'instruction d'écriture répété à la transaction partielle $TP_3$ ayant été réputé valablement exécuté lors de la transaction partielle $TP_4$ suivante, les messages de justificatif de transmission et d'accusé de réception sont à nouveau à la valeur vraie.

La transaction partielle suivante $TP_5$ concerne également un message de transmission du deuxième mot de données $DAT_1$. Ce message comprend, de même que le message de transmission précédent à la transaction partielle $TP_4$, les mêmes attributs de code opération et de signature, et bien entendu, dans le champ des données utiles, le mot $DAT_1$ précité.

A titre d'exemple non limitatif, la transaction partielle suivante $TP_6$ est réputée constituée par une transaction arbitraire comportant un code opération NOP, les champs des messages de signature et de données n'étant pas significatifs et représentés par X. Lors de cette transaction partielle $TP_6$, la valeur des champs de messages de justificatif de transmission et d'accusé de réception est réputée à la valeur vraie, la transmission du deuxième mot de données à inscrire $DAT_1$ ayant été réputée convenablement exécutée.

Enfin, la dernière transaction partielle $TP_7$ consiste en une transaction de réponse de l'élément esclave SL, c'est-à-dire la mémoire Mem$_1$, lequel adresse un message de réponse de statut à l'élément maître concerné. Ce message de réponse de statut comprend bien entendu le code opération de réponse de statut RST, la valeur de signature zéro, identique. Le champ principal ne comporte pas de données significatives et, à ce titre, comprend la mention X.

**Revendications**

1. Système de liaison interne par BUS entre les différents éléments constitutifs d'un microcontrôleur, ces éléments cadencés par un signal d'horloge échangeant au cours d'une transaction à chaque cycle d'horloge au moins un mot de données utiles codé sur N bits entre un élément générateur de requête, désigné par élément maître, et un élément récepteur destinataire, désigné par élément esclave, caractérisé en ce que ladite liaison est effectuée par l'intermédiaire d'au moins une liaison par BUS de N+p bits, chaque liaison permettant d'engendrer des messages d'instruction codés sur N+p bits comportant au moins, sur un même cycle d'horloge courant:

   - un champ principal comportant un mot de données utiles codé sur N bits communiquées par l'élément maître à l'élément esclave ;
   - un champ auxiliaire codé sur p bits, ce champ auxiliaire comportant au moins un champ de code opération permettant d'identifier le message d'instruction et un champ de signature permettant d'identifier l'élément maître et l'élément esclave destinataire de ce message d'instruction ainsi que la transaction intervenant entre cet élément maître et cet élément esclave, et sur un cycle d'horloge suivant le cycle d'horloge courant :
   - un champ de message de justificatif de transmission de l'élément maître vers l'élément esclave, et un champ de message d'accusé de réception de l'élément esclave vers l'élément maître, la valeur vraie du message de justificatif d'émission et la valeur vraie du message d'accusé de réception permettant de valider une transaction partielle entre l'élément maître et l'élément esclave, ce qui permet d'assurer à partir de chaque élément maître ou esclave l'émission successive de messages d'instruction sur des cycles d'instructions successifs vers un élément esclave ou maître destinataire selon une succession de transactions partielles constitutives d'une transaction.

2. Système selon la revendication 1, caractérisé en ce que chaque élément maître ou esclave interconnecté à chaque liaison par BUS comporte en outre un premier et un deuxième registre d'émission de message d'instruction et un registre de réception de message d'instruction.

3. Système selon la revendication 1 ou 2, caractérisé en ce que le champ de message de justificatif de transmission et le champ de message d'accuse de réception sont codés chacun sur 1 bit.

4. Système selon l'une des revendications 1 à 3, caractérisé en ce que, à chaque élément maître ou esclave étant affecté un ordre prioritaire de transaction, celui-ci comprend en outre une liaison unidirectionnelle entre ces éléments, ladite liaison unidirectionnelle permettant à chaque élément d'ordre prioritaire de transaction d'adresser à tous les éléments maître-esclave d'ordre prioritaire inférieur un message d'autorisation ou d'absence d'autorisation de transaction, chaque élément d'ordre prioritaire donné étant habilité à opérer une transaction sous autorisation conditionnelle par l'ensemble des éléments d'ordre prioritaire supérieur à cet ordre prioritaire, et l'élément d'ordre prioritaire minimum recevant l'ensemble des messages d'autorisation de transaction délivrés par lesdits éléments d'ordre prioritaire supérieur et étant habilité soit à n'opérer aucune transaction, soit à opérer au moins une transaction arbitraire sous autorisation conditionnelle de l'ensemble des éléments d'ordre prioritaire supérieur.

5. Système selon l'une des revendications 1 à 4, caractérisé en ce que chaque élément constitutif dudit microcontrôleur est interconnecté par l'intermédiaire de deux liaisons par BUS N+p bits à un autre élément dudit microcontrôleur respectivement à une liaison par BUS N+p bits commune par l'intermédiaire d'un circuit d'interfaçage, ce qui permet d'augmenter en conséquence le débit des données transmises entre éléments dudit microcontrôleur et la cadence de traitement de ces données par ledit microcontrôleur.

6. Système selon l'une des revendications 4 ou 5 précédentes, caractérisé en ce que ladite liaison unidirectionnelle présente une structure en cascade, chaque élément auquel un ordre de priorité donné a été attribué étant interconnecté unidirectionnellement à tout élément auquel un ordre de priorité inférieur à ce dernier a été attribué, ce qui permet de supprimer tout risque de conflit d'accès desdits éléments.

7. Protocole de transmission de données numériques entre les éléments constitutifs d'un microcontrôleur, chaque élément étant interconnecté à un autre élément par l'intermédiaire d'au moins une liaison par BUS de type parallèle permettant, au cours d'une transaction, la transmission de messages successifs, constitutifs d'une transaction partielle entre deux de ces éléments, selon une transmission synchrone à partir d'un signal d'horloge, succession d'une pluralité de cycles d'horloge, caractérisé en ce que ledit protocole consiste au moins à :

- transmettre, à partir d'un élément émetteur de requête, désigné par élément maître, vers un élément récepteur destinataire, désigné par élément esclave, sur un cycle d'horloge courant, un message d'instruction, codé sur N+p bits, ledit message d'instruction comportant au moins, d'une part, un champ principal, codé sur N bits, contenant un mot de données utiles, communiquées par l'élément maître à l'élément esclave, et, d'autre part, un champ auxiliaire comportant au moins un champ de code opération permettant d'identifier le message d'instruction et un champ de signature permettant d'identifier l'élément maître et l'élément esclave destinataire de ce message d'instruction ainsi que la transaction intervenant entre cet élément maître et cet élément esclave ;

- transmettre, simultanément, sur le cycle d'horloge suivant ledit cycle d'horloge courant, un message de justificatif de transmission de l'élément maître vers l'élément esclave et un message d'accusé de réception de l'élément esclave vers l'élément maître, la valeur vraie du message de justificatif d'émission et la valeur vraie du message d'accusé de réception permettant de valider ladite transaction partielle ;

- répéter les étapes précédentes sur au moins un cycle d'horloge ultérieur audit cycle d'horloge courant entre le même couple d'éléments maître-esclave et entre au moins un autre couple d'éléments maître-esclave pour assurer l'exécution de transactions partielles, constitutives de transactions successives entre ces couples d'éléments maître-esclave.

**8.** Protocole selon la revendication 7, caractérisé en ce que, à chacun des éléments constitutifs dudit microcontrôleur étant attribué un ensemble d'adresses dédiées distinctes, et à chaque message d'instruction étant assigné un code opération dans ledit champ de code opération, ledit protocole consiste à transmettre, à partir dudit élément maître vers ledit élément esclave une signature qualifiée dans ledit champ de signature, ladite signature qualifiée étant représentative dudit élément maître, de la transaction partielle et de la transaction engendrée par cet élément maître vers ledit élément esclave.

**9.** Protocole selon la revendication 8, caractérisé en ce que ledit mot de données utiles contenues dans le champ principal est constitué par un mot de données d'adresse dudit élément esclave ou par un mot de données numériques à lire ou à mémoriser, le mot de données utiles de la première transaction partielle entre ledit élément maître et ledit élément esclave étant constitué par les données d'adresse dudit élément esclave, toutes les transactions partielles ultérieures entre ledit même couple d'éléments maître-esclave comportant un mot de données utiles constitué par des données numériques à lire ou a mémoriser.

**10.** Protocole selon l'une des revendications 7 à 9, caractérisé en ce que ledit champ auxiliaire comporte en outre un champ de contrôle, permettant de gérer chaque transaction partielle et chaque transaction.

**11.** Protocole selon l'une des revendications 7 à 10, caractérisé en ce que celui-ci consiste en outre :

- à affecter à chaque élément constitutif dudit microcontrôleur un ordre prioritaire de transaction, et, au cours d'échanges des messages d'instruction constitutifs chacun d'une transaction partielle entre couples d'éléments maître-esclave dudit microcontrôleur,

- à transmettre, à partir de chaque élément d'ordre prioritaire supérieur, un message d'autorisation ou d'absence d'autorisation de transaction vers tous les éléments maître-esclave d'ordre prioritaire inférieur, chaque élément d'ordre prioritaire donné étant habilité à opérer une transaction sous autorisation conditionnelle par l'ensemble des éléments d'ordre prioritaire supérieur à cet ordre prioritaire donné et l'élément d'ordre prioritaire minimum recevant l'ensemble des messages d'autorisation de transaction délivrés par lesdits éléments d'ordre prioritaire supérieur, et étant habilité soit à n'opérer aucune transaction, soit à opérer au moins une transaction arbitraire sous autorisation conditionnelle de l'ensemble des éléments d'ordre prioritaire supérieur.

**12.** Protocole selon l'une des revendications 7 à 11, caractérisé en ce que chaque mot de données utiles est codé sur N = 32 Bits, chaque champ auxiliaire comportant au moins 16 bits.

# FIG.1a.

(ART ANTÉRIEUR)

FIG.1b.
(ART ANTÉRIEUR)

EP 1 011 051 A1

16

FIG.2b.

FIG.2a.

## FIG.3a.

| 1 | 2 | 3 | q-1 | q | q+1 | Q |
|---|---|---|-----|---|-----|---|
| 0 | 0 | 0 | 0 | 1 | X | X |

REÇUS — TRANSMIS

MESSAGES REÇUS ET TRANSMIS PAR
ELÉMENT D'ORDRE PRIORITAIRE
$H = q, q \in [1, Q]$

## FIG.3b.

| 1 | 2 | 3 | --- | q | --- | --- | Q-1 |
|---|---|---|-----|---|-----|-----|-----|
| 0 | 0 | 0 | 0 | 0 | 0 | 0 | 0 |

MESSAGES REÇUS PAR ÉLEMENT
D'ORDRE PRIORITAIRE MINIMUM $H = Q$

N BITS     p BITS

NHS

LU   NHE   D.ut ADR./DAT.   COD OP   Sig   CTL   Sen   Ack

$H = q \in [1, Q]$   0   31

NHE = q-1
NHS = 1

## FIG.4a.

CYCLE D'HORLOGE SUIVANT

CYCLE D'HORLOGE COURANT

CHAMP AUXILIAIRE p BITS

| COD OP | Sig | CTL | Sen Ack |
|--------|-----|-----|---------|

| 1 | 0 | 1 | 1 | 0 | 1 | 0 | 0 | 1 | 0 | 1 | 0 | 1 | 1 | 1 | 1 |
|---|---|---|---|---|---|---|---|---|---|---|---|---|---|---|---|

N BITS CHAMP PRINCIPAL

DONNÉES UTILES ADR. OU DAT.

| 0 | | | | | | | | | | | | N-1 |
|---|---|---|---|---|---|---|---|---|---|---|---|-----|

## FIG.4b.

FIG.5a.

FIG.5b.

CHARGEMENT DE 2 MOTS AVEC RÉPÉTITION

| | TP1<br>M→SL | TP2 | TP3<br>SL→M | TP4<br>SL→M | TP5<br>SL→M | TP6 | TP7<br>SL→M |
|---|---|---|---|---|---|---|---|
| COD. OP. | L | NOP | RD | | | NOP | RD |
| Sig. | O | X | O | | | X | O |
| D. ut | ADR | X | DAT0 | DAT1 | DAT0 | X | DAT0 |
| Sen | | | | | | | |
| Ack | | | | | | | |

RÉPÉTITION DE TP3

RÉPÉTITION DE TP5

FIG.5c.

ÉCRITURE DE 2 MOTS AVEC RÉPÉTITION

| | TP1<br>M→SL<br>CPU1→MEM1 | TP2<br>M→SL<br>CPU1→MEM1 | TP3<br>M→SL<br>CPU1→MEM1 | TP4<br>M→SL<br>CPU1→MEM1 | TP5<br>M→SL<br>CPU1→MEM1 | TP6 | TP7<br>SL→M<br>MEM1→CPU1 |
|---|---|---|---|---|---|---|---|
| COD. OP. | ST | ED | ST | ED | | NOP | RST |
| Sig. | O | | | | | X | O |
| D. ut | ADR | DAT0 | ADR | DAT0 | DAT1 | X | |
| Sen | | | | | | | |
| Ack | | | | | | | |

RÉPÉTITION DE TP2

FIG.5d.

Office européen
des brevets

**RAPPORT DE RECHERCHE EUROPEENNE**

Numéro de la demande

EP 98 40 3131

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>A | EP 0 348 672 A (IBM) 3 janvier 1990<br>* colonne 4, ligne 36 - colonne 5, ligne 14 *<br>* colonne 6, ligne 2 - colonne 9, ligne 45 *<br>* abrégé; revendications 1-3; figures 6-8 *<br>--- | 1,7<br>2-6,8-12 | G06F13/42 |
| A | EP 0 674 266 A (DISCOVISION ASS) 27 septembre 1995<br>* page 2, ligne 44 - page 3, ligne 55 *<br>* page 4, ligne 3 - ligne 42 *<br>* abrégé *<br>----- | 1-12 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 17 juin 1999 | Nguyen Xuan Hiep, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**          EP 98 40 3131

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-06-1999

| Document brevet cité au rapport de recherche | Date de publication | Membre(s) de la famille de brevet(s) | | Date de publication |
|---|---|---|---|---|
| EP 0348672 A | 03-01-1990 | US | 4961140 A | 02-10-1990 |
| | | CA | 1318037 A | 18-05-1993 |
| | | JP | 2019954 A | 23-01-1990 |
| | | JP | 2038768 C | 28-03-1996 |
| | | JP | 7075016 B | 09-08-1995 |
| EP 0674266 A | 27-09-1995 | CA | 2145156 A | 25-09-1995 |
| | | CA | 2145157 A | 25-09-1995 |
| | | CA | 2145158 A | 25-09-1995 |
| | | CA | 2145159 A | 25-09-1995 |
| | | CA | 2145218 A | 25-09-1995 |
| | | CA | 2145219 A | 25-09-1995 |
| | | CA | 2145220 A | 25-09-1995 |
| | | CA | 2145221 A | 25-09-1995 |
| | | CA | 2145222 A | 25-09-1995 |
| | | CA | 2145223 A | 25-09-1995 |
| | | CA | 2145224 A | 25-09-1995 |
| | | CA | 2145225 A | 25-09-1995 |
| | | CA | 2145361 A | 25-09-1995 |
| | | CA | 2145362 A | 25-09-1995 |
| | | CA | 2145363 A | 25-09-1995 |
| | | CA | 2145365 A | 25-09-1995 |
| | | CA | 2145379 A | 25-09-1995 |
| | | CA | 2145423 A | 25-09-1995 |
| | | CA | 2145424 A | 25-09-1995 |
| | | CA | 2145425 A | 25-09-1995 |
| | | CA | 2145426 A | 25-09-1995 |
| | | CA | 2145427 A | 25-09-1995 |
| | | CA | 2145549 A | 25-09-1995 |
| | | CA | 2244810 A | 25-09-1995 |
| | | CN | 1114489 A | 03-01-1996 |
| | | CN | 1133534 A | 16-10-1996 |
| | | CN | 1137212 A | 04-12-1996 |
| | | CN | 1118475 A | 13-03-1996 |
| | | EP | 0674442 A | 27-09-1995 |
| | | EP | 0674446 A | 27-09-1995 |
| | | EP | 0674443 A | 27-09-1995 |
| | | EP | 0895422 A | 03-02-1999 |
| | | EP | 0895166 A | 03-02-1999 |
| | | EP | 0895167 A | 03-02-1999 |
| | | EP | 0895161 A | 03-02-1999 |
| | | EP | 0884910 A | 16-12-1998 |
| | | EP | 0891088 A | 13-01-1999 |
| | | EP | 0897244 A | 17-02-1999 |
| | | EP | 0901286 A | 10-03-1999 |
| | | EP | 0891089 A | 13-01-1999 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 98 40 3131

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-06-1999

| Document brevet cité au rapport de recherche | Date de publication | Membre(s) de la famille de brevet(s) | Date de publication |
|---|---|---|---|
| EP 0674266 A | | EP 0901287 A | 10-03-1999 |
| | | EP 0896473 A | 10-02-1999 |
| | | EP 0896474 A | 10-02-1999 |
| | | EP 0896475 A | 10-02-1999 |
| | | EP 0896476 A | 10-02-1999 |
| | | EP 0896477 A | 10-02-1999 |
| | | GB 2287808 A,B | 27-09-1995 |
| | | GB 2288957 A,B | 01-11-1995 |

EPO FORM P0460

Pour tout renseignement concernant cette annexe : voir Journal Officiel de l'Office européen des brevets, No.12/82